(19) Europäisches Patentamt
European Patent Office
Office européen des brevets

(11) EP 2 028 213 B1

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(51) Int Cl.:
***C08G 77/08*** *(2006.01)*

(21) Anmeldenummer: **08157534.2**

(22) Anmeldetag: **04.06.2008**

(54) **Verfahren zur Herstellung von verzweigten Polyorganosiloxanen**

Method for producing branched polyorganosiloxane

Procédé de fabrication de polyorganosiloxanes ramifiés

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.08.2007 DE 102007037292**

(43) Veröffentlichungstag der Anmeldung:
**25.02.2009 Patentblatt 2009/09**

(73) Patentinhaber: **Evonik Goldschmidt GmbH
45127 Essen (DE)**

(72) Erfinder:
- **Brückner, Arndt
45473, Mülheim an der Ruhr (DE)**
- **Schiller, Carsten
45470, Mülheim an der Ruhr (DE)**
- **Mund, Christian
45149, Essen (DE)**

(56) Entgegenhaltungen:
**EP-A- 1 460 098 US-A1- 2004 138 399**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren zur Herstellung verzweigter Siloxane aus unverzweigten, in der Polymerkette Silanwasserstoff enthaltenden Polysiloxanen.

Siloxane werden aufgrund ihrer einzigartigen Eigenschaften wie Wasserabstoßung, Grenzflächenaktivität, Temperaturstabilität etc. in zahlreichen technischen Anwendungen eingesetzt. Dazu zählen die Stabilisierung von Polyurethan-Schäumen, der Einsatz als Emulgatoren, in Trennbeschichtungen und viele weitere.

Diese Siloxane weisen in der Regel eine lineare oder verzweigte, terminal oder kammförmig modifizierte Struktur auf. Verzweigte Siloxane sind für eine Vielzahl von Anwendungen von Interesse. So beschreibt beispielsweise die europäische Patentschrift EP 0 025 822 die Verwendung verzweigter Siloxane zur Herstellung von Polyurethanschaum.

Die Herstellung verzweigter Siloxane kann nach dem Stand der Technik durch Cohydrolyse von trifunktionellen Silanen und von Siloxanen erfolgen. So beschreibt die europäische Patentanmeldung EP 1 172 397 die säurekatalysierte Umsetzung von Trialkoxysilanen mit Disiloxanen und anschließender alkalischer Äquilibrierung mit Cyclotetrasiloxanen. Die europäische Patentschrift EP 0 019 251 beschreibt die Umsetzung von Trichlorsilanen mit Cyclotetrasiloxanen. Weber et al. beschreiben die Herstellung verzweigter Siloxane durch anionische Ringöffnungspolymerisation von siloxymodifizierten Cylcotrisiloxanen (W. P. Weber, J. K. Paulasaari, G. Cai, Synthesis of Linear Copolymers with Regular Microstructures and Synthesis of Soluble Polysiloxanes with Trifunctional $RSiO_{3/2}$ (T) or Tetrafunctional $SiO_{4/2}$ (Q) Units, Kapitel 7 in S. J. Clarson et al., Synthesis and Properties of Silicone and Silicone-Modified Materials, American Chemical Society 2003).

Die Bildung von die Siloxankette verzweigenden T-Einheiten aus Alkyl-Si (H) $O_{2/2}$-Einheiten durch Einwirkung von Tris (pentafluorphenyl)boran ist aus der Patentanmeldung US 2006/0211836 bekannt. Hierbei werden feste Gele erhalten, die jedoch für die typischen Anwendungsgebiete organomodifizierter Siloxane nicht geeignet sind.

Die Patentanmeldung WO 01/74938 beschreibt die Bildung von T-Einheiten durch dehydrogenative Kondensation von SiOH-haltigen Siloxanen mit SiH-haltigen Siloxanen durch Katalyse mit borhaltigen Verbindungen. Nachteilig an diesem Verfahren ist einerseits die Toxizität der im Produkt verbleibenden borhaltigen Verbindungen und andererseits, dass die Produkte vernetzte Gele sind, während für die eingangs erwähnten Anwendungen für Silicone-Additive flüssige, nichtvernetzte Produkte vonnöten sind.

Die Bildung von die Siloxankette verzweigenden T-Einheiten aus $HSi(Me_2)O_{1/2}$-Siloxankettenenden als Nebenreaktion bei übergangsmetallkatalysierten Hydrosilylierungsreaktionen ist aus X. He, A. Lapp, J. Herz, Makromol. Chem. 1988, 189, 1061-1075 bekannt.

Gustavson et al. beschreiben Umlagerungsreaktionen von Silanwasserstoff tragenden Siloxanen in Gegenwart von Übergangsmetallkomplexen des Platins, Palladiums, Iridiums und Rhodiums (W. A. Gustavson, P. S. Epstein, M. D. Curtis, J. Organomet. Chem. 1982, 238, 87-97). So beobachteten sie die Bildung von T-Einheiten bei Einwirkung von $(Ph_3P)_2(CO)ClIr$ auf 1,1,1,2,3,4,4,4-Octamethyltetrasiloxan.

Da die Übergangsmetallkomplexe toxikologisch bedenklich sind und zudem in relativ hohen Konzentrationen eingesetzt werden, besteht ein Bedarf an übergangsmetallfreien Katalysatoren zur technisch umsetzbaren Bildung von T-Einheiten.

Die Bildung von T-Einheiten durch Einwirkung von Carboxylaten auf Silanwasserstoff-haltige Siloxane, selbst in Abwesenheit hydroxyfunktioneller Verbindungen, ist bislang unbekannt. Stand der Technik ist, dass Carboxylate in Gegenwart hydroxyfunktioneller Verbindungen die Verknüpfung dieser hydroxyfunktionellen Verbindungen mit den Silanwasserstoff tragenden Einheiten des Siloxans unter Bildung von R-Si(OR')$O_{2/2}$-Einheiten ($T^{OR}$-Einheiten, R und R' = organische Reste) katalysieren. So beschreibt die europäische Patentschrift EP 1 460 098 ein Verfahren, bei dem organisch modifizierte Polyorganosiloxane durch Umsetzung von Wasserstoffsiloxanen mit Alkoholen in einer dehydrogenativen Kondensation unter Knüpfung von $T^{OR}$-Einheiten mit einer katalytischen Menge einer Mischung einer organischen Säure und ihres Salzes hergestellt werden.

Die EP 0 475 440 beschreibt ein Verfahren, bei dem Wasserstoffsiloxane mit einem Alkohol unter Zugabe einer organischen Säure in Gegenwart eines Pt-Salzes umgesetzt werden. Für die Reaktion ist es unabdingbar, dass sowohl große Mengen an organischer Säure (0,1 bis 1 mol bezogen auf Alkohol), Toluol als Lösungsmittel und ein Platinsalz eingesetzt werden. T-Einheiten werden dabei nicht gebildet.

In J. Boyer, R. J. P. Corriu, R. Perz, C. Reye, J. Organomet. Chem. 1978, 157, 153-162 wird ein Verfahren der Alkoholyse von Silanen in Gegenwart äquimolarer Mengen von Salzen, wie z. B. Kaliumtartrat, -phthalat oder -formiat, beschrieben. Dabei werden $T^{OP}$-Einheiten gebildet und keine T-Einheiten.

Die US 6 284 908 beschreibt ein Verfahren, bei dem Tetraalkylammoniumhydroxide, Alkalimetallhydroxide oder Erdalkalimetallhydroxide als Katalysatoren der Disproportionierung von Wasserstoffsiloxanen zu Polysilsesquioxanen $(RSiO_{3/2})_n$ und Oligohydridosilanen eingesetzt werden. Innerhalb von Minuten entstehen Gele oder gelartige Festkörper und es werden flüchtige Silane freigesetzt.

Nachteilig an den Verfahren des Standes der Technik ist, dass die Verfahren aufwändig sind und den Umgang mit hydrolyseempfindlichen Silanen erfordern. Darüber hinaus ist die Hydrolyse von Chlorsilanen von der Freisetzung

aggressiven Chlorwasserstoffs begleitet, was eine Handhabung auf korrosionsbeständige Anlagen beschränkt und zu ökologischen Problemen führt. Daher ist es wünschenswert, den Umgang mit Silanen möglichst bei der Herstellung von Spezialchemikalien zu vermeiden und auf die Herstellung wohlfeiler Polysiloxane zu beschränken.

Es bestand daher die Aufgabe, ein technisch einfaches und wirtschaftliches Verfahren bereitzustellen, das es ermöglicht, verzweigte Siloxane mit $R\text{-}SiO_{3/2}$-Einheiten (T-Einheiten, R = ein organischer Rest) aus wohlfeilen Polysiloxanen herzustellen und welches vorzugsweise einen oder mehrere der Nachteile der Verfahren des Standes der Technik nicht aufweist.

Überraschenderweise wurde gefunden, dass dieses Ziel durch die Umsetzung eines unverzweigten, in der Polymerkette Silanwasserstoff enthaltenden Siloxans mit Ammonium- oder Metallcarboxylaten als wirksame Katalysatoren erreicht werden kann.

Gegenstand der vorliegenden Erfindung ist deshalb ein Verfahren zur Herstellung verzweigter, $R\text{-}SiO_{3/2}$-Einheiten enthaltender Siloxane, mit R = organischer Rest, welches dadurch gekennzeichnet ist, dass unverzweigte, in der Polymerkette Silanwasserstoff enthaltende Polysiloxane in Gegenwart von Ammonium- oder Metallcarboxylaten als Katalysator in Abwesenheit von hydroxyfunktionellen organischen Verbindungen umgesetzt werden.

Ebenfalls Gegenstand der vorliegenden Erfindung sind Siloxane, erhältlich nach dem erfindungsgemäßen Verfahren sowie die Verwendung dieser Siloxane, insbesondere bei der Herstellung von Polyurethanschäumen.

Das erfindungsgemäße Verfahren weist zahlreiche Vorteile gegenüber Verfahren des Standes der Technik auf. Im Gegensatz zu Verfahren nach dem Stand der Technik, ausgehend von Chlorsilanen, sind erfindungsgemäß Polyorganosiloxane herstellbar, die nicht mit aus der Substitutionsreaktion stammender Salzsäure, Chlorwasserstoff bzw. deren Neutralisationsprodukten entsprechenden Chloriden verunreinigt sind. Dies erleichtert eine Weiterverarbeitung bzw. Aufarbeitung erheblich.

Ferner zeichnet sich das erfindungsgemäße Verfahren dadurch aus, dass keine toxikologisch bedenklichen Übergangsmetalle oder borhaltigen Verbindungen eingesetzt werden.

Weiterhin hat das erfindungsgemäße Verfahren gegenüber den Verfahren des Standes der Technik den Vorteil, dass die erhaltenen Produkte in der Regel fließfähig sind und keine stark vernetzten Gele, was ihren Einsatz als Silicone-Additiv für einer Vielzahl an Anwendungsgebieten ermöglicht.

Das erfindungsgemäße Verfahren zur Herstellung verzweigter Siloxane sowie deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollumfänglich zum Offenbarungsgehalt der vorliegenden Erfindung gehören.

Das erfindungsgemäße Verfahren zur Herstellung verzweigter, $R\text{-}SiO_{3/2}$-Einheiten enthaltender Siloxane, mit R = organischer Rest, zeichnet sich dadurch aus, dass unverzweigte, in der Polymerkette Silanwasserstoff enthaltende Polysiloxane in Gegenwart von Ammonium- oder Metallcarboxylaten als Katalysator in Abwesenheit von hydroxyfunktionellen organischen Verbindungen umgesetzt werden.

Als unverzweigtes Polysiloxan, werden vorzugsweise Verbindungen der allgemeinen Formel (I)

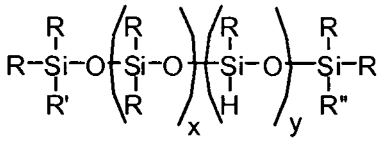
(I)

eingesetzt, in denen

R für einen oder mehrere, gleiche oder verschiedene Reste, ausgewählt aus linearen, cyclischen oder verzweigten, gesättigten, ein- oder mehrfach ungesättigten und/oder aromatischen Kohlenwasserstoffresten mit bis zu 200 Kohlenstoffatomen steht, die gegebenenfalls ein oder mehrere Substituenten tragen können, ausgewählt aus der Gruppe, die besteht aus einer gegebenenfalls substituierten, bevorzugt ein oder mehrere Stickstoffatome enthaltenden heterocyclischen Gruppe, Amino-, Alkylamino-, Dialkylamino-, Ammonium-, Polyether-, Polyester- und Polyetheresterresten,
die gegebenenfalls ein oder mehrere Gruppen enthalten können, ausgewählt aus- O-, $-NR^1-$, -C(O)-, -C(S)-, -C(O)O-, C(O)OH, -C(O)NH- und $-C(O)NR^2-$, $-SO_3H$, $-SO_3^{-1}/_wM^{w+}$, $-OSO_3H$, $-OSO_3^{-1}/_wM^{w+}$, $-PO_3^{-2}/_wM^{w+}$, $-PO_3H^{-1}/_wM^{w+}$, $-PO_3H_2$, $-OPO_3^{2-2}/_wM^{w+}$, $-OPO_3H^{-1}/_wM^{w+}$, $-OPO_3H_2$, worin

$R^1$ Wasserstoff oder einen geradkettigen, cyclischen oder verzweigten, gesättigten, ungesättigten und/oder

aromatischen, gegebenenfalls verbrückenden Kohlenwasserstoffrest mit bis zu 50 Kohlenstoffatomen darstellt, der ein oder mehrere Gruppen ausgewählt aus -O- und -C(O)- enthalten kann und worin

$R^2$ einen einwertigen, geradkettigen, cyclischen oder verzweigten, gesättigten, ungesättigten und/oder aromatischen Kohlenwasserstoffrest mit bis zu 100 Kohlenstoffatomen darstellt, der ein oder mehrere Gruppen ausgewählt aus -O-,-$NR^1$-, -C (O)- und -C (S)-, -C (O) O-, und -C (O) NH- enthalten kann und worin

$M^{w+}$ für ein w-wertiges Kation mit w = 1, 2, 3 oder 4, insbesondere $K^+$, $Na^+$, $NH_4^+$, $(i\text{-}C_3H_7)NH_3^+$ oder $(CH_3)_4N^+$ steht,

R' und R" unabhängig voneinander H oder R,

x eine ganze Zahl von 1 bis 200, vorzugsweise 2 bis 100, bevorzugt 10 bis 50 darstellt,

y eine ganze Zahl von 1 bis 100, vorzugsweise 2 bis 50, bevorzugt 3 bis 30 darstellt

und Verbindungen erhalten werden, die mindestens eine Siloxaneinheit der Formel (II)

$$RSiO_{3/2} \qquad (II)$$

enthalten.

Bevorzugt werden als unverzweigtes Siloxan, Verbindungen der allgemeinen Formel (I) eingesetzt, bei denen der Rest R für gleiche oder unterschiedliche, unsubstituierte Alkylgruppen, bevorzugt für Methylgruppen steht. Besonders bevorzugte Verbindungen der allgemeinen Formel (I) sind solche, bei denen die Reste R, R' und R" Methylgruppen sind. Ganz besonders bevorzugt eingesetzte unverzweigte Siloxane der allgemeinen Formel (I) sind solche, bei denen die Reste R, R' und R" Methylgruppen sind und bei denen x vorzugsweise 10 bis 50 und y vorzugsweise 2 bis 100, insbesondere 3 bis 30 sind.

Es kann vorteilhaft sein, wenn als unverzweigtes Siloxan, Verbindungen der allgemeinen Formel (III)

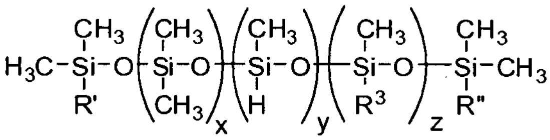

(III)

eingesetzt werden, in denen

$R^3$ jeweils unabhängig voneinander für eine Gruppe A-B-C steht, wobei

A eine zweiwertige Gruppe, ausgewählt aus linearen oder verzweigten, gesättigten, ein- oder mehrfach ungesättigten Alkyl-, Aryl-, Alkylaryl- oder Arylalkyloxygruppen mit 1 bis 20 Kohlenstoffatomen, vorzugsweise eine $-CH_2CH_2CH_2O-$ Gruppe ist,

B eine Gruppe der allgemeinen Formel (IV)

$$-(C_2H_4O)_n(C_3H_6O)_o(C_{12}H_{24}O)_p(C_8H_8O)_q(C_4H_8O)_r- \qquad (IV)$$

ist, mit

n, o, p, q und r voneinander unabhängigen ganzen Zahlen von 0 bis 50, vorzugsweise n = 0 bis 18, o = 0 bis 35 mit n + o = 3 bis 35 und p = q = r = 0 und, falls mehr als einer der Indices n, o, p, q, r > 0 ist, die allgemeine Formel IV ein statistisches Oligomer oder ein Blockoligomer darstellt,

C ausgewählt ist aus der Gruppe umfassend lineare oder verzweigte, gesättigte, ein- oder mehrfach ungesättigte Alkyl-, Aryl-, Alkylaryl- oder Arylalkylgruppen mit 1 bis 12 Kohlenstoffatomen oder Acetoxygruppen, vorzugsweise Methylgruppen,

R' und R" unabhängig voneinander H oder $R^3$ sind,

x eine ganze Zahl von 1 bis 200, vorzugsweise 2 bis 100, insbesondere 10 bis 50 darstellt,

y eine ganze Zahl von 1 bis 100, vorzugsweise 2 bis 50, insbesondere 3 bis 30 darstellt.

Durch die Verwendung von Siloxanen der allgemeinen Formel (III) können verzweigte Polyethersiloxane erhalten werden, die - je nach gewählten Siloxanrohstoffen und Organomodifizierungen - als Stabilisatoren für Polyurethanschäume oder als Entschäumer verwendet werden können. Über den Rest $R^3$ kann die gewünschte Polarität und die Verträglichkeit des Siloxans mit dem Anwendungssystem eingestellt werden.

Bevorzugt werden als unverzweigtes Siloxan Verbindungen der allgemeinen Formel (III) eingesetzt, bei denen die Reste R' und R" Methylgruppen sind. Ganz besonders bevorzugt eingesetzte unverzweigte Siloxane der allgemeinen

Formel (III) sind solche, bei denen die Reste R' und R" Methylgruppen sind und bei denen x vorzugsweise 10 bis 50 und y vorzugsweise 2 bis 100, insbesondere 3 bis 30 ist.

Als Katalysatoren wird in dem erfindungsgemäßen Verfahren vorzugsweise mindestens eine Verbindung der allgemeinen Formel (V) eingesetzt

$$R^4\text{-}C(O)O^{-}\ {}^{1}/_{u}\ G^{u+} \qquad (V)$$

in der

$R^4$ ausgewählt ist aus Wasserstoff oder organischen Resten, vorzugsweise linearen, cyclischen oder verzweigten, gesättigten, ein- oder mehrfach ungesättigten und/oder aromatischen Kohlenwasserstoffresten mit bis zu 30 Kohlenstoffatomen und

$G^{u+}$ ein u-wertiges Kation mit u 1, 2, 3 oder 4, vorzugsweise ein Ammoniumion, Alkali- oder Erdalkalimetallkationen, ganz besonders $K^+$, $Na^+$ oder $Cs^+$ ist.

Vorzugsweise wird als Katalysator mindestens ein Salz zumindest einer der folgenden Carbonsäuren eingesetzt: Ameisensäure, Essigsäure, Propionsäure, Buttersäure, Valeriansäure, Capronsäure, Heptansäure, Caprylsäure, Nonansäure, Caprinsäure, Undecansäure, Laurinsäure, Myristinsäure, Palmitinsäure, Stearinsäure, Arachinsäure, Behensäure, Cyclopentancarbonsäure, Cyclohexancarbonsäure, Acrylsäure, Methacrylsäure, Vinylessigsäure, Crotonsäure, 2-/3-/4-Pentensäure, 2-/3-/4-/5-Hexensäure, Lauroleinsäure, Myristoleinsäure, Palmitoleinsäure, Ölsäure, Gadoleinsäure, Sorbinsäure, Linolsäure, Linolensäure, Pivalinsäure, Ethoxyessigsäure, Phenylessigsäure, Milchsäure, 2-Ethylhexansäure, Oxalsäure, Malonsäure, Bernsteinsäure, Weinsäure, Glutarsäure, Adipinsäure, Pimelinsäure, Korksäure, Azelainsäure, Sebacinsäure, Benzoesäure, o-/m-/p-Tolylsäure, Salicylsäure, 3-/4-Hydroxybenzoesäure, Phthalsäuren, oder deren ganz oder teilweise hydrierten Derivate wie Hexahydro- oder Tetrahydrophthalsäure, oder Gemischen derselben.

Bevorzugt wird in dem erfindungsgemäßen Verfahren als Katalysator mindestens ein Ammonium-, Alkali- oder Erdalkalimetallsalz, vorzugsweise ein Alkali- oder Erdalkalimetallsalz der Capronsäure, Caprylsäure, Caprinsäure, Laurinsäure, Myristinsäure, Palmitinsäure, Stearinsäure, Arachinsäure und/oder Behensäure eingesetzt. Besonders bevorzugt wird als Katalysator mindestens ein Kalium- oder Cäsiumsalz, vorzugsweise ein Cäsiumsalz einer Carbonsäure eingesetzt. Ganz besonders bevorzugt wird als Katalysator Cäsiumstearat, Kaliumstearat, Kaliumlaurat und/oder Cäsiumlaurat, vorzugsweise Cäsiumlaurat eingesetzt.
In dem erfindungsgemäßen Verfahren kann der Katalysator homogen oder heterogen eingesetzt werden. Ebenso ist eine Ausgestaltung als homogenisierte heterogene bzw. heterogenisierte homogene Katalyse im Sinne der Erfindung möglich. Vorzugsweise wird der Katalysator homogen eingesetzt.

In dem erfindungsgemäßen Verfahren kann die Umsetzung in Gegenwart von Lösungsmittel oder in Abwesenheit von Lösungsmittel erfolgen. Vorzugsweise wird die Umsetzung lösungsmittelfrei durchgeführt, was insbesondere bei einer großtechnischen Realisierung unter wirtschaftlichen und ökologischen Aspekten vorteilhaft ist.

Die Reaktion kann unter den Verbindungen der Formeln (I) oder (III) selbst oder zwischen den Verbindungen der Formeln (I) bzw. (III) stattfinden.

Es kann vorteilhaft sein, wenn zunächst unverzweigte, in der Polymerkette Silanwasserstoff enthaltende Siloxane der Formel (I) umgesetzt werden, wobei noch Siloxane, die Silanwasserstoff tragende Gruppen aufweisen, im Reaktionsgemisch verbleiben, die in einem zweiten Verfahrensschritt im Zuge einer übergangsmetallkatalysierten Hydrosilylierungsreaktion mit einer oder mehreren Verbindungen E-A-B-L umgesetzt werden, wobei E eine einwertige Gruppe, ausgewählt aus $-CH=CH_2$ und $-C{\equiv}CH$, und L ein Wasserstoffatom oder der Rest C ist und A, B und C die oben angegebenen Bedeutungen haben.

Durch das erfindungsgemäße Verfahren sind erfindungsgemäße Siloxane erhältlich. Diese können zur Herstellung verzweigter Siloxane verwendet werden, wobei dabei Silanwasserstoffgruppen enthaltende Siloxane, die mit dem erfindungsgemäßen Verfahren erhalten wurden, mit einer oder mehreren Verbindungen E-A-B-L (Bedeutung der Reste wie oben) umgesetzt werden. Vorzugsweise wird $CH_2=CH-CH_2-O-(C_2H_4O)_n(C_3H_6O)_o-L$ mit n = 0 bis 18, o = 0 bis 35, n + o = 3 bis 35 und L = H oder $CH_3$ verwendet.

Die Herstellung von solchen verzweigten Siloxanen unter Verwendung erfindungsgemäßer Siloxane kann z. B. so erfolgen, dass zu dem die erfindungsgemäßen Siloxane enthaltenden Reaktionsgemisch das zu hydrosilylierende Substrat (E-A-B-L) und ein geeigneter Hydrosilylierungskatalysator, insbesondere ein Platinkatalysator zugegeben werden oder dass aus dem erfindungsgemäß erhaltenen Reaktionsgemisch zunächst der Verzweigungskatalysator abgetrennt wird, z. B. durch Ausfällen und Abfiltrieren und anschließend das zu hydrosilylierende Substrat (E-A-B-L) und ein geeigneter Hydrosilylierungskatalysator, insbesondere ein Platinkatalysator, zugegeben werden.

Die Herstellung von solchen verzweigten Siloxanen ist auch möglich, durch direkte Zugabe eines zu hydrosilylierenden Substrates (E-A-B-L) und eines geeigneten Hydrosilylierungskatalysators zum Reaktionsgemisch gleich zu

Beginn der Umsetzung von unverzweigten Silanwasserstoff enthaltenden Polysiloxanen in Gegenwart von Carboxylaten als Katalysator.

Die erfindungsgemäßen Siloxane, insbesondere solche, die Reste -A-B-L aufweisen, können insbesondere bei der Herstellung von Polyurethanschäumen, vorzugsweise als Schaumstabilisator, sowie zur Herstellung von Entschäumerformulierungen eingesetzt werden.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Ausführungsbeispiele:

Katalysator:

Der in den Beispielen 1 bis 5 verwendete Katalysator Cäsiumlaurat wurde wie folgt hergestellt:

In einem 500 ml-Dreihalskolben, der mit einem Rührer, einem Intensivkühler und einem Thermometer ausgerüstet ist, wurden 20 g Laurinsäure (Fa. Merck) bei 50 °C in 60 ml Methanol gelöst. Bei 50 °C wurden 16,3 g Cäsiumcarbonat (Fa. Aldrich) portionsweise innerhalb von 70 min. eingetragen, wobei eine Gasentwicklung stattfand. Es wurde 4 h unter Rückfluss nachgerührt und das erhaltene Reaktionsgemisch anschließend vom Lösungsmittel am Rotationsverdampfer befreit. Es wurden 32,2 g eines farblosen Feststoffes erhalten.

Reaktionsführung:

Alle Reaktionen wurden unter Schutzgas (Stickstoff) ausgeführt. Bei der Reaktion entstanden Dimethylsilan, Trimethylsilan, niedermolekulare Siloxane und Wasserstoff, die über eine Kühlfalle abgeleitet wurden.

Analysen:

Der Umsatz wurde durch die Bestimmung der Rest SiH-Funktionen mittels einer gasvolumetrischen Wasserstoffbestimmung [Umsatzangabe in %; SiH-Wert in val/kg Prüfsubstanz] ermittelt. Das Vorliegen der T-Einheiten wurde jeweils durch eine $^{29}$Si-NMR-spektroskopische Untersuchung des Reaktionsprodukts belegt.

M-Einheiten = $R_3SiO_{1/2}$,
M'-Einheiten = $P_2(H)SiO_{1/2}$,
D-Einheiten = $R_2SiO_{2/2}$,
D' = $R(H)SiO_{2/2}$,
T-Einheiten = $RSiO_{3/2}$.

Beispiel 1:

Umsetzung eines Siloxans der mittleren Struktur $(CH_3)_3SiO-[(CH_3)_2SiO]_{20}-[(CH_3)HSiO]_5-Si(CH_3)_3$ mit Cäsiumlaurat

In einem 250 ml-Dreihalskolben, der mit einem Rührer, einem Intensivkühler und einem Thermometer ausgerüstet war, wurden 40,5 des Siloxans vorgelegt. Bei 50 °C wurden 0,2 g Cäsiumlaurat zugesetzt, die Temperatur wurde anschließend auf 130 °C erhöht und dann wurde noch für 1 h bei 130 °C nachgerührt. Die gasvolumetrische Wasserstoffbestimmung ergab einen 21%igen Abbau von Silanwasserstoff. Es wurde ein hellgelbes, viskos-flüssiges Produkt erhalten, dessen $^{29}$Si-NMR-Spektrum (erstellt mit Bruker AVANCE 400 NMR-Spektrometer mit Auswertesoftware XWIN-NMR 3.1 und Tetramethylsilan als internem Standard) Signale der chemischen Verschiebungen von 10 bis 7 ppm (M-Einheiten; 6,5 % der Gesamtsignalintensität), -5 bis -7 ppm (M'-Einheiten; 5,1 % der Gesamtsignalintensität), -18 bis -23 ppm (D-Einheiten; 72,7 % der Gesamtsignalintensität), -35 bis -38 ppm (D'-Einheiten; 6,4 % der Gesamtsignalintensität), und -63 bis -69 ppm (T-Einheiten; 9,3 % der Gesamtsignalintensität) zeigt.

Beispiel 2:

Umsetzung eines Siloxans der mittleren Struktur $(CH_3)_3SiO-[(CH_3)_2SiO]_{20}-[(CH_3)HSiO]_5-Si(CH_3)_3$ mit Cäsiumlaurat und anschließender Hydrosilylierungsreaktion

In einem 250 ml-Dreihalskolben, der mit einem Rührer, einem Intensivkühler, einem Tropftrichter und einem Thermometer ausgerüstet war, wurden 40,5 des Siloxans vorgelegt. Bei 50 °C wurden 0,2 g Cäsiumlaurat zugesetzt,

die Temperatur wurde auf 130 °C erhöht und es wurde noch für 1 h bei 130 °C nachgerührt. Die gasvolumetrische Wasserstoffbestimmung ergab einen 21%igen Abbau von Silanwasserstoff. Die Reaktionsmischung wurde auf 88 °C gekühlt und mit Karstedt-Katalysator (Platin-Divinyltetramethyldisiloxan-Komplex der Firma ABCR, 15 Massen-ppm Platin bezogen auf das Gesamtansatzgewicht) versetzt. Bei 88 °C wurden 88 g eines mit Allylalkohol gestarteten, rein Propylenoxid-haltigen Polyethers mit Methyl-Endverkappung (mit einer mittleren Molmasse von 1.000 g/mol) zugetropft. Anschließend wurde 1,5 h bei 88 °C nachgerührt und dann auf Raumtemperatur erkaltet. Der Katalysator Cäsiumlaurat wurde abfiltriert. Es wurde ein hellgelbes, viskoses Produkt erhalten, dessen $^{29}$Si-NMR-Spektrum (aufgenommen wie in Beispiel 1 beschrieben) Signale der chemischen Verschiebungen von 9 bis 7 ppm (M-Einheiten; 13,2 % der Gesamtsignalintensität), -19 ppm (cyclische D-Einheiten; 5,0 % der Gesamtsignalintensität), -21 bis -23 ppm (D-Einheiten; 71,7 % der Gesamtsignalintensität), und -65 bis - 70 ppm (T-Einheiten; 10,1 % der Gesamtsignalintensität) zeigt.

Beispiel 3:

Umsetzung eines organomodifizierten Siloxans mit Cäsiumlaurat

In einem 250 ml-Dreihalskolben, der mit einem Rührer, einem Intensivkühler, einem Tropftrichter und einem Thermometer ausgerüstet ist, wurden 70 g eines mit Allylalkohol gestarteten, Ethylenoxid (EO) und Propylenoxid (PO) haltigen Polyethers mit Methyl-Endverkappung (mittlere Molmasse von 1.100 g/mol, ca. 60 % EO, ca. 40 % PO), vorgelegt und bei 70 °C mit Karstedt-Katalysator (Platin-Divinyltetramethyldisiloxan-Komplex der Firma ABCR, 8 Massen-ppm Platin bezogen auf das Gesamtansatzgewicht) versetzt. Anschließend wurden 36,4 g eines Siloxans der mittleren Struktur $(CH_3)_3SiO-[(CH_3)_2SiO]_{40}-[(CH_3)HSiO]_3-Si(CH_3)_3$ bei 70 °C zugetropft und 2 h nachgerührt. Anschließend wurden 0,5 g Cäsiumlaurat zugesetzt und die Reaktionsmischung auf 130 °C erhitzt. Bei dieser Temperatur wurde noch für 4 h nachgerührt. Die gasvolumetrische Wasserstoffbestimmung ergab einen 98%igen Verbrauch von Silanwasserstoff. Nach dem Erkalten auf Raumtemperatur wurde der Katalysator Cäsiumlaurat abfiltriert. Es wurde ein hellgelbes, viskoses Produkt erhalten, dessen $^{29}$Si-NMR-Spektrum (aufgenommen wie in Beispiel 1 beschrieben) Signale der chemischen Verschiebungen von 9 bis 7 ppm (M-Einheiten; 5,0 % der Gesamtsignalintensität), -19 ppm (cyclische D-Einheiten; 9,3 % der Gesamtsignalintensität), -21 bis -23 ppm (D-Einheiten; 82,6 % der Gesamtsignalintensität), und -65 bis -68 ppm (T-Einheiten; 3,1 % der Gesamtsignalintensität) zeigt.

Beispiel 4:

Umsetzung eines organomodifizierten Siloxans mit Kaliumlaurat

In einem 250 ml-Dreihalskolben, der mit einem Rührer, einem Intensivkühler und einem Thermometer ausgerüstet ist, wurden 80 g eines mit Allylalkohol gestarteten, Ethylenoxid (EO)- und Propylenoxid (PO)-haltigen Polyethers mit Methyl-Endverkappung (mittlere Molmasse von 1.100 g/mol, ca. 60 % EO, ca. 40 % PO) und 19,5 g eines Siloxans der mittleren Struktur $(CH_3)_3SiO-[(CH_3)_2SiO]_{30}-[(CH_3)HSiO]_{10}-Si(CH_3)_3$ vorgelegt und bei 52 °C mit Karstedt-Katalysator (Platin-Divinyltetramethyldisiloxan-Komplex der Firma ABCR, 8 Massen-ppm Platin bezogen auf das Gesamtansatzgewicht) versetzt. Es wurde 2 h bei 70 °C nachgerührt. Anschließend wurden 0,5 g Kaliumlaurat zugesetzt und die Reaktionsmischung auf 130 °C erhitzt. Es wurde noch 8 h bei 130 °C und 2 h bei 140 °C nachgerührt. Anschließend wurden noch 11 g des Polyethers zugesetzt und weitere 2 h bei 100 °C nachgerührt. Die gasvolumetrische Wasserstoffbestimmung ergab einen 96%igen Verbrauch von Silanwasserstoff. Nach dem Erkalten auf Raumtemperatur wurde der Katalysator Kaliumlaurat abfiltriert. Es wurde ein hellgelbes, viskoses Produkt erhalten, dessen $^{29}$Si-NMR-Spektrum (aufgenommen wie in Beispiel 1 beschrieben) Signale der chemischen Verschiebungen von 7 ppm (M-Einheiten; 4,6 % der Gesamtsignalintensität), -19 bis -24 ppm (D-Einheiten; 91,4 % der Gesamtsignalintensität), und -64 bis -70 ppm (T-Einheiten; 4,0 % der Gesamtsignalintensität) zeigt.

Beispiel 5:

Umsetzung eines Siloxans der mittleren Struktur $(CH_3)_3SiO-[(CH_3)_2SiO]_{20}-[(CH_3)HSiO]_5-Si(CH_3)_3$ mit Cäsiumlaurat

In einem 1.000 ml-Dreihalskolben, der mit einem Rührer, einem Intensivkühler und einem Thermometer ausgerüstet ist, wurden 430 g eines mit Allylalkohol gestarteten, rein Propylenoxid (PO)-haltigen Polyethers mit Methyl-Endverkappung (mittlere Molmasse von 1.000 g/mol) auf 70 °C erhitzt und mit Karstedt-Katalysator (Platin-Divinyltetramethyldisiloxan-Komplex der Firma ABCR, 8 Massen-ppm Platin bezogen auf das Gesamtansatzgewicht) versetzt. Bei 70 °C wurden 171 g eines Siloxans der mittleren Struktur $(CH_3)_3SiO-[(CH_3)_2SiO]_{30}-[(CH_3)HSiO]_{10}-Si(CH_3)_3$ zugetropft. Nach 2 h wurde die Temperatur von 70 auf 130 °C angehoben, und es wurden 3 g Cäsiumlaurat zugesetzt. Nach weiteren 2,5 h wurden weitere 1,5 g Cäsiumlaurat zugesetzt, und es wurde noch für 11 h bei 140 °C nachgerührt. Die

gasvolumetrische Wasserstoffbestimmung ergab einen 99%igen Verbrauch von Silanwasserstoff. Nach dem Erkalten auf Raumtemperatur wurde der Katalysator Cäsiumlaurat abfiltriert. Es wurde ein hellgelbes, viskoses Produkt erhalten, dessen $^{29}$Si-NMR-Spektrum (aufgenommen wie in Beispiel 1 beschrieben) Signale der chemischen Verschiebungen von 7 ppm (M-Einheiten; 6,7 % der Gesamtsignalintensität), -19 bis -23 ppm (D-Einheiten; 90,0 % der Gesamtsignalintensität), und -63 bis -69 ppm (T-Einheiten; 3,3 % der Gesamtsignalintensität) zeigt.

Herstellung eines Gemisches aus Cäsiumlaurat und Laurinsäure für Beispiel 6:

In einem 500 ml-Dreihalskolben, der mit einem Rührer, einem Intensivkühler und einem Thermometer ausgerüstet ist, wurden 81,5 g Cäsiumcarbonat (Fa. Aldrich) bei 50 °C in 300 g Ethanol gelöst. Bei 50 °C wurden 200 g Laurinsäure (Fa. Merck) portionsweise innerhalb von 3,5 h eingetragen, wobei eine Gasentwicklung stattfand. Es wurde 2,5 h bei 70 °C nachgerührt und anschließend vom Lösungsmittel am Rotationsverdampfer befreit. Es wurden 265 g eines farblosen Gemisches aus Cäsiumlaurat und Laurinsäure erhalten.

Beispiel 6:

Umsetzung eines organomodifizierten Siloxans mit Cäsiumlaurat in Gegenwart der freien Carbonsäure Laurinsäure

In einem 250 ml-Dreihalskolben, der mit einem Rührer, einem Intensivkühler und einem Thermometer ausgerüstet ist, wurden 80,4 g eines mit Allylalkohol gestarteten, Ethylenoxid (EO)- und Propylenoxid (PO)-haltigen Polyethers mit Methyl-Endverkappung (mittlere Molmasse von 1.100 g/mol, ca. 60 % EO, ca. 40 % PO) und 19,5 g eines Siloxans der mittleren Struktur $(CH_3)_3SiO-[(CH_3)_2SiO]_{30}-[(CH_3)HSiO]_{10}-Si(CH_3)_3$ vorgelegt und bei 70 °C mit Karstedt-Katalysator (Platin-Divinyltetramethyldisiloxan-Komplex der Firma ABCR, 4 Massen-ppm Platin bezogen auf das Gesamtansatzgewicht) versetzt. Es wurde 2 h bei 70 °C nachgerührt. Anschließend wurden 0,5 g des Cäsiumlaurat-Laurinsäure-Gemisches zugesetzt und die Reaktionsmischung auf 130 °C erhitzt. Bei dieser Temperatur wurde noch 4 h bei 130 °C nachgerührt. Die gasvolumetrische Wasserstoffbestimmung ergab einen 98%igen Verbrauch von Silanwasserstoff. Nach dem Erkalten auf Raumtemperatur wurde die Katalysatormischung abfiltriert. Es wurde ein hellgelbes, viskoses Produkt erhalten, dessen $^{29}$Si-NMR-Spektrum (aufgenommen wie in Beispiel 1 beschrieben) Signale der chemischen Verschiebungen von 7 ppm (M-Einheiten; 4,4 % der Gesamtsignalintensität), -19 ppm (cyclische D-Einheiten; 6,0 % der Gesamtsignalintensität), -20 bis -23 ppm (D-Einheiten; 84,64 % der Gesamtsignalintensität), und -65 bis -68 ppm (T-Einheiten; 5,0 % der Gesamtsignalintensität) zeigt.

Anwendungsbeispiel 1:

Stabilisierung von Polyurethan-Hartschaumstoffen

Bei der Herstellung von Polyurethan- und Polyisocyanurat- Hartschaumstoffen werden schaumstabilisierende Additive eingesetzt, welche für eine feinzellige, gleichmäßige und störungsarme Schaumstruktur sorgen und damit die Gebrauchseigenschaften - besonders das thermische Isolationsvermögen - des Hartschaumstoffes in wesentlichem Maße positiv beeinflussen. Besonders effektiv sind Tenside auf der Basis von Polyether-modifizierten Siloxanen, welche daher den bevorzugten Typ der Zellstabilisatoren darstellen. Da es eine Vielzahl verschiedener Hartschaumformulierungen für unterschiedliche Anwendungsgebiete gibt, die individuelle Anforderungen an den Schaumstabilisator stellen, werden Polyethersiloxane unterschiedlicher Struktur eingesetzt. In vielen Einsatzgebieten sind Verbesserungen der Schaumstabilisatoren gegenüber dem Stand der Technik wünschenswert, um die Gebrauchseigenschaften der Hartschaumstoffe weiter zu optimieren, insbesondere hinsichtlich der Wärmeleitfähigkeit und der Schaumdefekte an der Oberfläche der Schaumstoffe. Weitere bei der Herstellung von Hartschaumstoffen wichtige Kriterien sind die Fließfähigkeit und Volumenausbeute des Schaums bei gegebener Formulierung und Treibmittelmenge. Auch diese Parameter lassen sich durch Wahl eines optimierten Stabilisators positiv beeinflussen. Die erfindungsgemäßen, verzweigten Polyorganosiloxane eignen sich für die Anwendung als Schaumstabilisator bei Polyurethan- und Polyisocyanurat-Hartschaumstoffen, wie ein anwendungstechnischer Vergleich mit konventionellen, unverzweigten Polyethersiloxanen, welche den Stand der Technik darstellen, zeigt.

Eine typische Formulierung zur Herstellung von Polyurethan- bzw. Polyisocyanurat-Hartschaumstoffen basiert auf einem oder mehreren organischen Isocyanaten mit zwei oder mehr Isocyanat-Funktionen, einem oder mehreren Polyolen mit zwei oder mehr gegenüber Isocyanat reaktiven Gruppen, Katalysatoren für die Reaktionen Isocyanat-Polyol und/oder Isocyanat-Wasser und/oder die Isocyanat-Trimerisierung, Polyethersiloxan-Schaumstabilisatoren, Wasser, optional physikalischen Treibmitteln, optional Flammschutzmitteln und ggf. weiteren Additiven. Für den anwendungstechnischen Vergleich von erfindungsgemäßen und konventionellen Schaumstabilisatoren wurde folgende Schaumformulierung verwendet:

| Komponente | Einsatzmenge |
|---|---|
| Polyetherpolyol* | 95 g (100 Teile) |
| N,N-Dimethylcyclohexylamin (DMCHA) | 1,4 g (1,5 Teile) |
| Wasser | 2,5 g (2,6 Teile) |
| cyclo-Pentan | 12,4 g (13,1 Teile) |
| Stabilisator | 1,4 g (1,5 Teile) |
| Methylendiphenyl-4,4'-diisocyanat (MDI)** | 188,6 g (198,5 Teile) |
| * Daltolac R 471 der Firma Huntsman<br>** polymeres MDI, 200 mPa*s, 31,5 % NCO, Funktionalität 2,7 | |

Die Durchführung der Vergleichsverschäumungen erfolgte im Handmischverfahren. Dazu wurden Polyol, Katalysatoren, Wasser, konventioneller bzw. erfindungsgemäßer Schaumstabilisator und Treibmittel in einen Becher eingewogen und mit einem Tellerrührer (6 cm Durchmesser) 30 s bei 1.000 Upm vermischt. Durch erneutes abwiegen wurde die beim Mischvorgang verdunstete Treibmittelmenge bestimmt und wieder ergänzt. Jetzt wurde das MDI zugegeben, die Reaktionsmischung mit dem beschriebenen Rührer 5 s bei 3000 Upm verrührt und sofort in eine auf 45 °C thermostatisierte Aluminiumform von 145 cm x 14 cm x 3,5 cm Größe überführt, welche im Winkel von 10 ° (entlang der 145 cm messenden Seite) geneigt und mit Polyethylenfolie ausgekleidet war. Die Schaumformulierung wurde dabei an der tiefer liegenden Seite eingetragen, so dass der expandierende Schaum die Form im Eingussbereich ausfüllt und in Richtung der höher liegenden Seite aufsteigt. Die Einsatzmenge an Schaumformulierung war dabei so bemessen, dass sie unterhalb der zur Mindestbefüllung der Form notwendigen Menge lag. Die Länge des nach Aushärtung erhaltenen Schaumstoff-Formteils kann somit - normiert auf das Gewicht - als Maß für die Volumenausbeute herangezogen werden. Nach 10 min. wurden die Schaumstoffe entformt und analysiert. Oberfläche und Innenstörungen wurden subjektiv anhand einer Skala von 1 bis 10 beurteilt, wobei 10 einen ungestörten Schaum und 1 einen extrem stark gestörten Schaum repräsentiert. Die Porenstruktur (Zellfeinheit, mittlere Zahl der Zellen pro 1 cm) wurde auf einer Schnittfläche optisch durch Vergleich mit hauseigenen Vergleichsschäumen beurteilt. Die Fließlänge (als Maß für die Volumenausbeute) wurde durch Ausmessen des Schaumstoff-Formteils bestimmt und zum besseren Vergleich gemäß folgender Formel auf ein Standardgewicht von 260 g und Normdruck umgerechnet:

Reduzierte Fließlänge =
Schaumlänge * 260 g * Luftdruck/( Schaumgewicht * 1013 mbar

Alle verwendeten Zellstabilisatoren und die zugehörigen Verschäumungsergebnisse sind in Tabelle 1 zusammengestellt.

Tabelle 1:

| Zellstabilisator | Schaumqualität hinsichtlich Defekten | | | Zellfeinheit [Zellen/cm] | Red. Fließlänge [cm] |
|---|---|---|---|---|---|
| | Oberseite | Unterseite | Innen | | |
| TEGOSTAB B 8443* | 4 | 4 | 8 | 36-40 | 132,0 |
| TEGOSTAB B 8462* | 4 | 4 | 7,5 | 36-40 | 131,4 |
| Beispiel 1 | 6 | 4 | 6,5 | 36-40 | 129,3 |
| Beispiel 2 | 5 | 5,5 | 6,5 | 36-40 | 131,6 |
| Beispiel 3 | 4,5 | 4,5 | 7,5 | 30-34 | 130,3 |
| * Polyethersiloxan-Zellstabilisator für Polyurethan-Hartschaumanwendungen von Degussa | | | | | |

Die Ergebnisse belegen, dass mit den erfindungsgemäßen, verzweigten Polyethersiloxanen Hartschaumstoffe hergestellt werden können. Dabei werden hinsichtlich Zellfeinheit, Fließfähigkeit bzw. Volumenausbeute gleich gute Ergebnisse und hinsichtlich der Oberflächenqualität sogar bessere Ergebnisse als mit den aus dem Stand der Technik bekannten konventionellen Polyethersiloxanen erzielt.

Anwendungsbeispiel 2:

Verwendung als Ölkomponente in Entschäumerformulierungen

In vielen wässrigen Anwendungen werden Tenside als Hilfsmittel eingesetzt, beispielsweise als Netzmittel, Detergentien, Dispergiermittel, Emulgatoren. Häufig führt die Verwendung von Tensiden jedoch zu einer störenden Schaumentwicklung. Diese Schaumentwicklung wird in der Regel durch die Zugabe eines Entschäumers unterdrückt. Die Entschäumer bestehen häufig aus einer Dispersion von feinteiligen, hydrophoben Partikeln in einem wasserunlöslichen Öl.

Um zu testen, ob erfindungsgemäß hergestellte, verzweigte Polyethersiloxane als Ölkomponente in Entschäumerzubereitungen verwendet werden können, wurde eine Formulierung mit der folgenden Zusammensetzung hergestellt:

96,5 Gewichtsanteile des gemäß Beispiel 5 hergestellten verzweigten Polyethersiloxans und 3,5 Gewichtsanteile feinteilige Kieselsäure.

Bei der verwendeten feinteiligen Kieselsäure handelte es sich in der Formulierung (A) um eine hydrophobierte pyrogene Kieselsäure mit einer BET-Oberfläche (Oberfläche, bestimmt nach der dem Fachmann geläufigen Methode nach Brunauer, Emmett und Tellet) von 110 $m^2/g$ und in der Formulierung (B) um eine hydrophobierte Fällungskieselsäure mit einer BET-Oberfläche von 90 $m^2/g$. Sie wurden jeweils mit Hilfe eines schnell laufenden Rührwerks mit einer Turbine 1 h in das Siloxan eingearbeitet. Von diesen Zubereitungen wurde die entschäumende Wirkung bestimmt. Dazu wurden 2 Gew.-% Entschäumer 10 min. mit einem Magnetrührer in das jeweils zu testende Tensidkonzentrat eingearbeitet. Dann wurde eine 0,2 Gew.-%ige wässrige Lösung dieser Tensid/Entschäumermischung erstellt, was einem Gehalt von 40 Massen-ppm Entschäumer in der Tensidlösung entspricht. In einem 2 1 Messzylinder wurde durch 1 l der Tensidlösung mit konstanten 6 l/min. ein feiner Luftstrom über eine Glasfritte der Porosität 1 geleitet. Das Volumen des dadurch entstehenden Schaums wurde verfolgt und der Versuch bei Erreichen von 1.000 ml Schaumvolumen beendet und die vergangene Zeit notiert. Erreichte das Schaumvolumen nicht innerhalb von 30 min. 1.000 ml, wurde der Versuch gestoppt und das entstandene Schaumvolumen notiert. Die Versuche wurden bei Raumtemperatur und bei 60 °C durchgeführt.

Die folgende Tabelle 2 fasst die Ergebnisse zusammen. Bei Tensidkonzentrat T1 handelt es sich um eine 75 Gew.-%ige Lösung eines Natrium-Sulfobernsteinsäure-di(isooctyl)esters (REWOPOL® SB DO 75, der Goldschmidt GmbH), bei T2 um Polyoxyethylen-(6)-isotridecylalkohol (TEGO® Alkanol TD6, der Goldschmidt GmbH).

Tabelle 2:

| Ergebnisse im Anwendungsbeispiel 2 | | | |
|---|---|---|---|
| Tensidkonzentrat | Formulierung | Entschäumung Raumtemperatur | Entschäumung 60 °C |
| T1 | Tensid ohne Entschäumer | 12 s | 12 s |
| T1 | A | 30 min: 800 ml | 30 min: 800 ml |
| T1 | B | 30 min: 800 ml | 30 min: 750 ml |
| T2 | Tensid ohne Entschäumer | 57 s | 60 s |
| T2 | A | 199 s | 30 min: 200 ml |
| T2 | B | 104 s | 30 min: 150 ml |

Die Ergebnisse der Tabelle 2 belegen, dass mit den erfindungsgemäßen, verzweigten Polyethersiloxanen Entschäumerzubereitungen hergestellt werden können, die die Schaumbildung im Vergleich zu Tensidlösungen ohne Zusatz eines Entschäumers deutlich inhibieren.

## Patentansprüche

1. Verfahren zur Herstellung verzweigter, R-$SiO_{3/2}$-Einheiten enthaltender Siloxane, mit R = organischer Rest, **dadurch gekennzeichnet, dass** unverzweigte, in der Polymerkette Silanwasserstoff enthaltende Polysiloxane in Gegenwart von Ammonium- oder Metallcarboxylaten als Katalysator in Abwesenheit von hydroxyfunktionellen organischen Verbindungen umgesetzt werden.

2. Verfahren gemäß Anspruch 1, **dadurch gekennzeichnet, dass** als unverzweigtes Polysiloxan, Verbindungen der allgemeinen Formel (I)

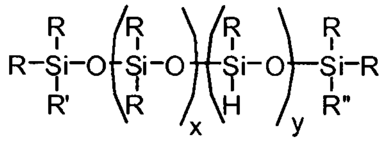

(I)

eingesetzt werden, in denen

R für einen oder mehrere, gleiche oder verschiedene Reste, ausgewählt aus linearen, cyclischen oder verzweigten, gesättigten, ein- oder mehrfach unge- sättigten und/oder aromatischen Kohlenwasserstoff- resten mit bis zu 200 Kohlenstoffatomen steht, die ge- gebenenfalls ein oder mehrere Substituenten tragen können, ausgewählt aus der Gruppe, die besteht aus einer gegebenenfalls substituierten, bevorzugt ein oder mehrere Stickstoffatome enthaltenden heterocyc- lischen Gruppe, Amino-, Alkylamino-, Dialkylamino-, Ammonium-, Polyether-, Polyester- und Polyetherester- resten, die gegebenenfalls ein oder mehrere Gruppen enthalten können, ausgewählt aus
-O-, $-NR^1-$, -C(O)-, -C(S)-, -C(O)O-, C(O)OH, -C(O)NH- und $-C(O)NR^2-$, $-SO_3H$, $-SO_3^{-1}/_wM^{w+}$, $-OSO_3H$, $-OSO_3^{-1}/_wM^{w+}$,- $PO_3^{2-2}/_wM^{w+}$, $-PO_3H^{-1}/_wM^{w+}$, $-PO_3H_2$, $-OPO_3^{2-2}/_wM^{w+}$, $-PO_3H^{-1}/_wM^{w+}$, $-OPO_3H_2$,
worin

$R^1$ Wasserstoff oder einen geradkettigen, cyclischen oder verzweigten, gesättigten, ungesättigten und/oder aromatischen, gegebenenfalls verbrücken- den Kohlenwasserstoffrest mit bis zu 50 Kohlen- stoffatomen darstellt, der ein oder mehrere Gruppen ausgewählt aus -O- und -C(O)- enthalten kann und
$R^2$ einen einwertigen, geradkettigen, cyclischen oder verzweigten, gesättigten, ungesättigten und/oder aromatischen Kohlenwasserstoffrest mit bis zu 100 Kohlenstoffatomen darstellt, der ein oder mehrere Gruppen ausgewählt aus -O-, $-NR^1-$, -C(O)- und -C(S)-, -C(O)O-, und -C(O)NH- enthalten kann und
$M^{w+}$ für ein w-wertiges Kation mit w = 1, 2, 3 oder 4, insbesondere $K^+$, $Na^+$, $NH_4^+$; $(i-C_3H_7)NH_3^+$ oder $(CH_3)_4N^+$ steht,

R' und R" unabhängig voneinander H oder R,
x eine ganze Zahl von 1 bis 200 darstellt,
y eine ganze Zahl von 1 bis 100 darstellt

und Verbindungen erhalten werden, die mindestens eine Siloxaneinheit der Formel (II)

$$RSiO_{3/2} \qquad \text{(II)}$$

enthalten.

3. Verfahren gemäß Anspruch 2, **dadurch gekennzeichnet, dass** als unverzweigtes Siloxan, Verbindungen der allgemeinen Formel (I) eingesetzt werden, wobei R für Methylgruppen steht.

4. Verfahren gemäß Anspruch 1 oder 2, **dadurch gekennzeichnet, dass** als unverzweigte Siloxane Verbindungen der allgemeinen Formel (III)

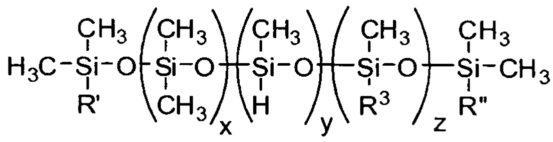

(III)

eingesetzt werden, in denen

$R^3$ jeweils unabhängig voneinander für eine Gruppe A-B-C steht, wobei

A eine zweiwertige Gruppe, ausgewählt aus linearen oder verzweigten, gesättigten, ein- oder mehrfach ungesättigten Alkyl-, Aryl-, Alkylaryl- oder Aryl- alkyloxygruppen mit 1 bis 20 Kohlenstoffatomen ist,
B eine Gruppe der allgemeinen Formel (IV)

$$-(C_2H_4O)_n(C_3H_6O)_o(C_{12}H_{24}O)_p(C_8H_8O)_q(C4H_8O)_r- \qquad (IV)$$

ist, mit

n, o, p, q und r voneinander unabhängigen ganzen Zahlen von 0 bis 50, und falls mehr als einer der Indices n, o, p, q, r > 0 ist, die allgemeine Formel IV ein statis- tisches Oligomer oder ein Blockoligomer darstellt,
C ausgewählt ist aus der Gruppe umfassend lineare oder verzweigte, gesättigte, ein- oder mehrfach ungesättigte Alkyl-, Aryl-, Alkylaryl- oder Arylalkyl- gruppen mit 1 bis 12 Kohlenstoffatomen oder Ace- toxygruppen,
R' und R" unabhängig voneinander H oder $R^3$ sind,
x eine ganze Zahl von 1 bis 200 darstellt,
y eine ganze Zahl von 1 bis 100 darstellt.

**5.** Verfahren gemäß einem der Ansprüche 1 bis 4, **dadurch gekennzeichnet, dass** als Katalysator mindestens eine Verbindung der allgemeinen Formel (V)

$$R^4\text{-}C(O)O^- \, {}^1/_u \, G^{u+} \qquad (V)$$

eingesetzt wird, in der

$R^4$ ausgewählt ist aus Wasserstoff oder linearen, cyc- lischen oder verzweigten, gesättigten, ein- oder mehrfach ungesättigten und/oder aromatischen Kohlenwasser- stoffresten mit bis zu 30 Kohlenstoffatomen und $G^{u+}$ für ein u-wertiges Kation mit u = 1, 2, 3 oder 4 steht, insbesondere Ammoniumion, Alkali- oder Erdalkalimetallkationen, ganz besonders $K^+$, $Na^+$, $Cs^+$.

**6.** Verfahren gemäß einem der Ansprüche 1 bis 5, **dadurch gekennzeichnet, dass** als Katalysator mindestens ein Salz der folgenden Carbonsäuren eingesetzt wird
Ameisensäure, Essigsäure, Propionsäure, Buttersäure, Valeriansäure, Capronsäure, Heptansäure, Caprylsäure, Nonansäure, Caprinsäure, Undecansäure, Laurinsäure, Myristinsäure, Palmitinsäure, Stearinsäure, Arachinsäure, Behensäure, Cyclopentancarbonsäure, Cyclohexancarbonsäure, Acrylsäure, Methacrylsäure, Vinylessigsäure, Crotonsäure, 2-/3-/4-Pentensäure, 2-/3-/4-/5-Hexensäure, Lauroleinsäure, Myristoleinsäure, Palmitoleinsäure, Ölsäure, Gadoleinsäure, Sorbinsäure, Linolsäure, Linolensäure, Pivalinsäure, Ethoxyessigsäure, Phenylessigsäure, Milchsäure, 2-Ethylhexansäure, Oxalsäure, Malonsäure, Bernsteinsäure, Weinsäure, Glutarsäure, Adipinsäure, Pimelinsäure, Korksäure, Azelainsäure, Sebacinsäure, Benzoesäure, o-/m-/p-Tolylsäure, Salicylsäure, 3-/4-Hydroxybenzoesäure, Phthalsäuren, oder deren ganz oder teilweise hydrierten Derivate wie Hexahydro- oder Tetrahydrophthalsäure, oder Gemischen derselben.

**7.** Verfahren nach zumindest einem der Ansprüche 1 bis 6, **dadurch gekennzeichnet, dass** als Katalysator mindestens ein Alkali- oder Erdalkalimetallsalz der Capronsäure, Caprylsäure, Caprinsäure, Laurinsäure, Myristinsäure, Palmitinsäure, Stearinsäure, Arachinsäure und/oder Behensäure eingesetzt wird.

**8.** Verfahren nach zumindest einem der Ansprüche 1 bis 7, **dadurch gekennzeichnet, dass** als Katalysator mindestens ein Kalium- oder Cäsiumsalz einer Carbonsäure eingesetzt wird.

**9.** Verfahren gemäß Anspruch 8, **dadurch gekennzeichnet, dass** als Katalysator Kaliumlaurat oder Cäsiumlaurat eingesetzt wird.

**10.** Verfahren nach zumindest einem der Ansprüche 1 bis 9, **dadurch gekennzeichnet, dass** zunächst unverzweigte, in der Polymerkette Silanwasserstoff enthaltende Siloxane umgesetzt werden, wobei noch Siloxane, die Silanwasserstoff tragende Gruppen im Reaktionsgemisch verbleiben, die in einem zweiten Verfahrensschritt im Zuge einer übergangsmetallkatalysierten Hydrosilylierungsreaktion mit einer oder mehreren Verbindungen E-A-B-L umgesetzt werden, wobei E eine einwertige Gruppe, ausgewählt aus $-CH=CH_2$ und -C=CH und L ein Wasserstoffatom oder der Rest C ist und A, B und C die in Anspruch 4 angegebene Bedeutung haben.

**11.** Verfahren nach zumindest einem der Ansprüche 1 bis 10, **dadurch gekennzeichnet, dass** die Katalysatoren homogen oder heterogen eingesetzt werden.

**12.** Verfahren nach zumindest einem der Ansprüche 1 bis 11, **dadurch gekennzeichnet, dass** die Umsetzung lösungsmittelfrei durchführt wird.

**13.** Siloxane, erhältlich nach einem Verfahren gemäß einem der Ansprüche 1 bis 12.

**14.** Verwendung von Siloxanen, erhalten durch ein Verfahren gemäß einem der Ansprüche 1 bis 12, zur Herstellung verzweigter Siloxane, **dadurch gekennzeichnet, dass** Silanwasserstoffgruppen enthaltende Siloxane mit einer oder mehreren Verbindungen E-A-B-L umgesetzt werden, wobei E eine einwertige Gruppe, ausgewählt aus $-CH=CH_2$ und -C=CH und L ein Wasserstoffatom oder der Rest C ist und A, B und C die in Anspruch 4 angegebene Bedeutung haben.

**15.** Verwendung der nach einem Verfahren der Ansprüche 1 bis 12 hergestellten Siloxane bei der Herstellung von Polyurethanschäumen.

**16.** Verwendung der nach einem Verfahren der Ansprüche 1 bis 12 hergestellten Siloxane bei der Herstellung von Entschäumerformulierungen.

## Claims

**1.** Process for the preparation of branched siloxanes containing $R-SiO_{3/2}$ units, where R = organic radical, **characterized in that** straight-chain polysiloxanes containing siloxane hydrogen in the polymer chain are reacted in the presence of ammonium or metal carboxylates as a catalyst in the absence of hydroxy-functional organic compounds.

**2.** Process according to Claim 1, **characterized in that** compounds of the general formula (I)

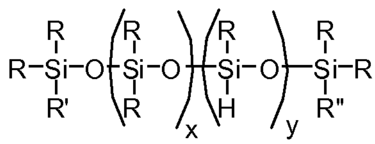

(I)

in which

R are one or more, identical or different radicals selected from linear, cyclic or branched, saturated, mono- or polyunsaturated and/or aromatic hydrocarbon radicals having up to 200 carbon atoms, which may optionally carry one or more substituents selected from the group which consists of an optionally substituted heterocyclic group preferably containing one or more nitrogen atoms, amino, alkylamino, dialkylamino, ammonium, polyether, polyester and polyether ester radicals which may optionally contain one or more groups selected from -O-, $-NR^1-$, -C(O)-, -C(S)-, -C(O)O-, C(O)OH, -C(O)NH- and $-C(O)NR^2-$, $-SO_3H$, $-SO_3^{-1}/_wM^{w+}$, $-OSO_3H$, $-OSO_3^{-1}/_wM^{w+}$, $-PO_3^{2-\,2}/_wM^{w+}$ $-pO_3H^{-1}/_wM^{w+}$, $-PO_3H_2$, $-OPO_3^{2-2}/_wM^{w+}$, $-OPO_3H^{-1}/_wM^{w+}$, $-OPO_3H_2$,

in which

$R^1$ is hydrogen or a straight-chain, cyclic or branched, saturated, unsaturated and/or aromatic, optionally bridged hydrocarbon radical having up to 50 carbon atoms, which may contain one or more groups selected from -O- and -C(O)- and in which
$R^2$ is a monovalent, straight-chain, cyclic or branched, saturated, unsaturated and/or aromatic hydrocarbon radical having up to 100 carbon atoms, which may contain one or more groups selected from -O-, $-NR^1-$, -C (O)- and -C(S)-, -C(O)O-, and -C(O)NH-, and in which
$m^{w+}$ is a w-valent cation where w = 1, 2, 3 or 4, in particular $K^+$, $Na^+$, $NH_4^+$, $(i-C_3H_7)NH_3^+$ or $(CH_3)_4N^+$,
R' and R'', independently of one another, are H or R,
x is an integer from 1 to 200,

y is an integer from 1 to 100,

are used as the straight-chain polysiloxane, and compounds which contain at least one siloxane unit of the formula (II)

$$RSiO_{3/2} \qquad (II)$$

are obtained.

3. Process according to Claim 2, **characterized in that** compounds of the general formula (I), in which R are methyl groups, are used as the straight-chain siloxane.

4. Process according to Claim 1 or 2, **characterized in that** compounds of the general formula (III)

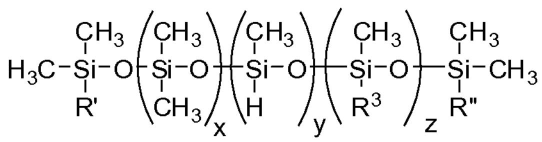

(III)

in which

$R^3$, in each case independently of one another, are a group A-B-C,
A being a divalent group selected from linear or branched, saturated or mono- or polyunsaturated alkyl, aryl, alkylaryl or arylalkoxy groups having 1 to 20 carbon atoms,
B being a group of the general formula (IV)

$$-(C_2H_4O)_n(C_3H_6O)_o(C_{12}H_{24}O)_p(C_8H_8O)_q(C_4H_8O)_r- \qquad (IV)$$

where

n, o, p, q and r, independently of one another, are integers from 0 to 50 and, if more than one of the indices n, o, p, q, r > 0, the general formula IV represents a random oligomer or a block oligomer,
C being selected from the group consisting of linear or branched, saturated or mono- or polyunsaturated alkyl, aryl, alkylaryl or arylalkyl groups having 1 to 12 carbon atoms or acetoxy groups,
R' and R", independently of one another, are H or $R^3$,
x is an integer from 1 to 200,
y is an integer from 1 to 100,

are used as straight-chain siloxanes.

5. Process according to any of Claims 1 to 4, **characterized in that** the catalyst used is at least one compound of the general formula (V)

$$R^4\text{-}C(O)O^- \ {}^1/_u \ G^{u+} \qquad (V)$$

in which

$R^4$ is selected from hydrogen or linear, cyclic or branched, saturated, mono- or polyunsaturated and/or aromatic hydrocarbon radicals having up to 30 carbon atoms and
$G^{u+}$ is a u-valent cation with u = 1, 2, 3 or 4, in particular ammonium ion, alkali metal or alkaline earth metal cations, very particularly $K^+$, $Na^+$ or $Cs^+$.

6. Process according to any of Claims 1 to 5, **characterized in that** the catalyst used is at least one salt of the following carboxylic acids formic acid, acetic acid, propionic acid, butyric acid, valeric acid, caproic acid, heptanoic acid, caprylic acid, nonanoic acid, capric acid, undecanoic acid, lauric acid, myristic acid, palmitic acid, stearic acid, arachidic acid, behenic acid, cyclopentanecarboxylic acid, cyclohexanecarboxylic acid, acrylic acid, methacrylic

acid, vinylacetic acid, crotonic acid, 2-/3-/4-pentenoic acid, 2-/3-/4-/5-hexenoic acid, lauroleic acid, myristoleic acid, palmitoleic acid, oleic acid, gadoleic acid, sorbic acid, linoleic acid, linolenic acid, pivalic acid, ethoxyacetic acid, phenylacetic acid, lactic acid, 2-ethylhexanoic acid, oxalic acid, malonic acid, succinic acid, tartaric acid, glutaric acid, adipic acid, pimelic acid, suberic acid, azelaic acid, sebacic acid, benzoic acid, o-/m-/p-toluic acid, salicylic acid, 3-/4-hydroxybenzoic acid, phthalic acids or the completely or partly hydrogenated derivatives thereof, such as hexahydro- or tetrahydrophthalic acid, or mixtures thereof.

7. Process according to at least one of Claims 1 to 6, **characterized in that** the catalyst used is at least one alkali metal or alkaline earth metal salt of caproic acid, caprylic acid, capric acid, lauric acid, myristic acid, palmitic acid, stearic acid, arachidic acid and/or behenic acid.

8. Process according to at least one of Claims 1 to 7, **characterized in that** the catalyst used is at least one potassium or cesium salt of a carboxylic acid.

9. Process according to Claim 8, **characterized in that** the catalyst used is potassium laurate or cesium laurate.

10. Process according to at least one of Claims 1 to 9, **characterized in that** first straight-chain siloxanes containing silane hydrogen in the polymer chain are reacted, siloxanes which have groups carrying silane hydrogen still remaining in the reaction mixture, which siloxanes are reacted in a second process step in the course of a transition metal-catalyzed hydrosilylation reaction with one or more compounds E-A-B-L, where E is a monovalent group selected from $-CH=CH_2$ and - C=CH and L is a hydrogen atom or the radical C and A, B and C have the meaning stated in Claim 4.

11. Process according to at least one of Claims 1 to 10, **characterized in that** the catalysts are used homogeneously or heterogeneously.

12. Process according to at least one of Claims 1 to 11, **characterized in that** the reaction is carried out in the absence of a solvent.

13. Siloxanes obtainable by a process according to any of Claims 1 to 12.

14. Use of siloxanes obtained by a process according to any of Claims 1 to 12 for the preparation of branched siloxanes, **characterized in that** siloxanes containing silane hydrogen groups are reacted with one or more compounds E-A-B-L, where E is a monovalent group selected from $-CH=CH_2$ and- C=CH and L is a hydrogen atom or the radical C and A, B and C have the meaning stated in Claim 4.

15. Use of the siloxanes prepared by a process of Claims 1 to 12 in the preparation of polyurethane foams.

16. Use of the siloxanes prepared by a process of Claims 1 to 12 in the preparation of antifoam formulations.

**Revendications**

1. Procédé pour la préparation de siloxanes ramifiés, contenant des motifs $R-SiO_{3/2}$, où R = radical organique, **caractérisé en ce que** des polysiloxanes non ramifiés, contenant de l'hydrogène en fonction silane dans la chaîne polymère, sont convertis en présence de carboxylates de métaux ou d'ammonium en tant que catalyseur, en absence de composés organiques à fonction hydroxy.

2. Procédé selon la revendication 1, **caractérisé en ce qu'**on utilise comme polysiloxane non ramifié des composés de formule générale (I)

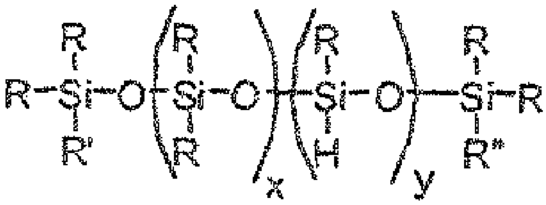

(I)

dans laquelle

R représente un ou plusieurs radicaux, identiques ou différents, choisis parmi des radicaux hydrocarbonés linéaires, cycliques ou ramifiés, saturés, une ou plusieurs fois insaturés et/ou aromatiques, ayant jusqu'à 200 atomes de carbone, qui peuvent éventuellement porter un ou plusieurs substituants choisis dans l'ensemble qui est constitué par un groupe hétérocyclique éventuellement substitué, contenant de préférence un ou plusieurs atomes d'azote, des radicaux amino, alkylamino, dialkylamino, ammonium, polyéther, polyester et polyéther-ester, qui peuvent éventuellement contenir un ou plusieurs groupes, choisis parmi
-O-, $-NR^1-$, -C(O)-, -C(S)-, -C(O)O-, C(O)OH, -C(O)NH- et $-C(O)NR^2-$, $-SO_3H$, $-SO_3^{-1}/_wM^{w+}$, $-OSO_3H$, $-OSO_3^{-1}/_wM^{w+}$, $-PO_3^{2-2}/_wM^{w+}$, $-PO_3H^{-1}/_wM^{w+}$, $-PO_3H_3$, $-OPO_3^{2-2}/_wM^{w+}$, $OPO_3H^{-1}/_wM^{w+}$, $-OPO_3H_2$,
où

$R^1$ représente un atome d'hydrogène ou un radical hydrocarboné à chaîne droite, cyclique ou ramifié, saturé, insaturé et/ou aromatique, éventuellement pontant, ayant jusqu'à 50 atomes de carbone, qui peut contenir un ou plusieurs groupes choisis parmi -O- et -C(O)- et
$R^2$ représente un radical hydrocarboné monovalent à chaîne droite, cyclique ou ramifié, saturé, insaturé et/ou aromatique, ayant jusqu'à 100 atomes de carbone, qui peut contenir un ou plusieurs groupes choisis parmi -O-, $-NR^1-$, -C (O)- et -C (S)-, -C (O) O- et -C (O) NH- et
$M^{w+}$ représente un cation w-valent où w = 1, 2, 3 ou 4, en particulier $K^+$, $Na^+$, $NH_4^+$, $(i-C_3H_7)NH_3^+$ ou $(CH_3)_4N^+$,
R' et R" représentent, indépendamment l'un de l'autre, H ou R,
x représente un nombre entier valant de 1 à 200,
y représente un nombre entier valant de 1 à 100,

et on obtient des composés qui contiennent au moins un motif silane de formule (II)

$RSiO_{3/2}$ (II).

3. Procédé selon la revendication 2, **caractérisé en ce qu'**on utilise comme siloxane non ramifié des composés de formule générale (I) dans lesquels R représente des groupes méthyle.

4. Procédé selon la revendication 1 ou 2, **caractérisé en ce qu'**on utilise comme siloxanes non ramifiés des composés de formule générale (III)

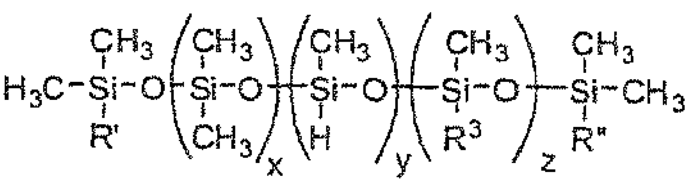

(III)

dans laquelle

$R^3$ représentent chacun, indépendamment les uns des autres, un groupe A-B-C, où
A est un groupe divalent, choisi parmi des groupes alkyle, aryle, alkylaryle ou arylalkyloxy linéaires ou ramifiés,

saturés, une ou plusieurs fois insaturés, ayant de 1 à 20 atomes de carbone,
B est un groupe de formule générale (IV)

$$-(C_2H_4O)_n(C_3H_6O)_o(C_{12}H_{24}O)p(C_8H_8O)q(C_4H_8O)_r- \qquad (IV)$$

où
n, o, p, q et r représentent, indépendamment les uns des autres, des nombres entiers valant de 0 à 50, et si plus d'un des indices n, o, p, q, r sont > 0, la formule générale IV représente un oligomère statistique ou un oligomère séquencé,
C est choisi dans l'ensemble comprenant des groupes alkyle, aryle, alkylaryle ou arylalkyle linéaires ou ramifiés, saturés, une ou plusieurs fois insaturés, ayant de 1 à 12 atomes de carbone ou des groupes acétoxy,
R' et R" représentent, indépendamment l'un de l'autre, H ou $R^3$,
x représente un nombre entier valant de 1 à 200,
y représente un nombre entier valant de 1 à 100.

5. Procédé selon l'une quelconque des revendications 1 à 4, **caractérisé en ce qu'**on utilise comme catalyseur au moins un composé de formule générale (V)

$$R^4\text{-}C(O)O^{-1}/_u\ G^{u+} \qquad (V)$$

dans laquelle

$R^4$ est choisi parmi un atome d'hydrogène ou des radicaux hydrocarbonés linéaires, cycliques ou ramifiés, saturés, une ou plusieurs fois insaturés et/ou aromatiques, ayant jusqu'à 30 atomes de carbone et
$G^{u+}$ représente un cation u-valent où u = 1, 2, 3 ou 4, en particulier l'ion ammonium, des cations de métaux alcalins ou alcalino-terreux, tout particulièrement $K^+$, $Na^+$, $Cs^+$.

6. Procédé selon l'une quelconque des revendications 1 à 5, **caractérisé en ce qu'**on utilise comme catalyseur au moins un sel des acides carboxyliques suivants
acide formique, acide acétique, acide propionique, acide butyrique, acide valérique, acide caproïque, acide heptanoïque, acide caprylique, acide nonanoïque, acide caprique, acide undécanoïque, acide laurique, acide myristique, acide palmitique, acide stéarique, acide arachidique, acide béhénique, acide cyclopentane-carboxylique, acide cyclohexanecarboxylique, acide acrylique, acide méthacrylique, acide vinylacétique, acide crotonique, acide 2-/3-/4-penténoïque, acide 2-/3-/4-/5-hexénoïque, acide lauroléique, acide myristoléique, acide palmitoléique, acide oléique, acide gadoléique, acide sorbique, acide linoléique, acide linolénique, acide pivalique, acide éthoxyacétique, acide phénylacétique, acide lactique, acide 2-éthylhexanoïque, acide oxalique, acide malonique, acide succinique, acide d-tartrique, acide glutarique, acide adipique, acide pimélique, acide subérique, acide azélaïque, acide sébacique, acide benzoïque, acide o-/m-/p-tolylique, acide salicylique, acide 3-/4-hydroxybenzoïque, acides phtaliques, ou leurs dérivés partiellement ou totalement hydrogénés, tels que l'acide hexahydro- ou tétrahydrophtalique, ou des mélanges de ceux-ci.

7. Procédé selon au moins l'une des revendications 1 à 6, **caractérisé en ce qu'**on utilise comme catalyseur au moins un sel de métal alcalin ou de métal alcalino-terreux de l'acide caproïque, de l'acide caprylique, de l'acide caprique, de l'acide laurique, de l'acide myristique, de l'acide palmitique, de l'acide stéarique, de l'acide arachidique et/ou de l'acide béhénique.

8. Procédé selon au moins l'une des revendications 1 à 7, **caractérisé en ce qu'**on utilise comme catalyseur au moins un sel de potassium ou de césium d'un acide carboxylique.

9. Procédé selon la revendication 8, **caractérisé en ce qu'**on utilise comme catalyseur le laurate de potassium ou le laurate de césium.

10. Procédé selon au moins l'une des revendications 1 à 9, **caractérisé en ce qu'**on fait d'abord réagir des siloxanes non ramifiés, contenant de l'hydrogène en fonction silane dans la chaîne du polymère, des siloxanes comportant des groupes portant de l'hydrogène en fonction silane, qui restent encore dans le mélange réactionnel étant mis en réaction, dans une deuxième étape du procédé au cours d'une réaction d'hydrosilylation catalysée avec un métal de transition, avec un ou plusieurs composés E-A-B-L, E étant un groupe monovalent, choisi parmi $-CH=CH_2$ et -C=CH et L étant un atome d'hydrogène ou le radical C et A, B et C ayant les significations indiquées dans la

revendication 4.

11. Procédé selon au moins l'une des revendications 1 à 10, **caractérisé en ce que** les catalyseurs utilisés sont homogènes ou hétérogènes.

12. Procédé selon au moins l'une des revendications 1 à 11, **caractérisé en ce que** la réaction est effectuée en absence de solvant.

13. Siloxanes, pouvant être obtenus conformément à un procédé selon l'une quelconque des revendications 1 à 12.

14. Utilisation de siloxanes, obtenus par un procédé selon l'une quelconque des revendications 1 à 12, pour la préparation de siloxanes ramifiés, **caractérisée en ce qu'**on fait réagir des siloxanes contenant des groupes hydrogénosilane avec un ou plusieurs composés E-A-B-L, E étant un groupe monovalent, choisi parmi $-CH=CH_2$ et -C=CH et L étant un atome d'hydrogène ou le radical C et A, B et C ayant les significations indiquées dans la revendication 4.

15. Utilisation des siloxanes préparés conformément à un procédé des revendications 1 à 12, dans la production de mousses de polyuréthanne.

16. Utilisation des silanes préparés conformément à un procédé des revendications 1 à 12, dans la production de compositions d'antimousses.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0025822 A
- EP 1172397 A
- EP 0019251 A
- US 20060211836 A
- WO 0174938 A
- EP 1460098 A
- EP 0475440 A
- US 6284908 B


### In der Beschreibung aufgeführte Nicht-Patentliteratur


- **S. J. CLARSON et al.** Synthesis and Properties of Silicone and Silicone-Modified Materials. American Chemical Society, 2003
- **X. HE ; A. LAPP ; J. HERZ.** *Makromol. Chem.,* 1988, vol. 189, 1061-1075
- **W. A. GUSTAVSON ; P. S. EPSTEIN ; M. D. CURTIS.** *J. Organomet. Chem.,* 1982, vol. 238, 87-97
- **J. BOYER ; R. J. P. CORRIU ; R. PERZ ; C. REYE.** *J. Organomet. Chem.,* 1978, vol. 157, 153-162